# EUROPEAN PATENT SPECIFICATION

(11) **EP 3 851 734 B1**
(45) Date of publication and mention of the grant of the patent: **12.07.2023**
(21) Application number: 20173356.5
(22) Date of filing: 07.05.2020
(51) Int. Cl.: F21K 9/235, F21K 9/238, F21V 31/00, H01R 33/09

(54) **WATERPROOF LAMP**
WASSERDICHTE LAMPE
LAMPE ÉTANCHE À L'EAU

(30) Priority: 19.01.2020 CN 202010062608
(43) Date of publication of application: 21.07.2021
(73) Proprietor: Xu, Xiaojun, Jiangmen (CN)
(72) Inventor: Xu, Xiaojun, Jiangmen (CN)
(74) Representative: LLR

(56) References cited:
- CN-U- 209 431 119
- US-A- 5 626 415
- US-A- 5 649 763
- US-A1- 2018 180 275

## Description

### CROSS REFERENCE TO RELATED APPLICATIONS

This application claims priority to Chinese Patent Application No. 202010062608.2, filed January 19, 2020.

### BACKGROUND

### 1. Technical Field

The present disclosure generally relates to lighting devices, and particularly to a waterproof lamp.

### 2. Description of Related Art

Many conventional lighting devices are waterproof. Through plastic injection molding process, a tight connection is formed between the lamp holder and the cables of some conventional lighting devices, which prevents liquid from entering the lamp holder. Although the above-mentioned way for waterproofing can satisfy basic requirements, it is still useful and desirable to provide a new waterproof lamp.

CN209431119U discloses a waterproof lamp holder, including a lamp holder and a lamp cover arranged at an end of the lamp holder. The lamp holder defines a mounting groove and a plurality of wire entering grooves. The lamp holder further defines a plurality of notches communicating with the mounting groove and the wire entering grooves. The lamp holder is provided with a plurality of wire carrying flutes communicating with the wire entering grooves. A wire gathering hole is defined passing though the mounting groove.

### SUMMARY

The present disclosure provides a waterproof lamp. The present invention is defined by the appended independent claim. Dependent claims constitute embodiments of the invention. Although the invention is only defined by the claims, the below embodiments, examples and aspects are only present for the sole purpose in aiding in understanding the background and advantages of the invention.

### BRIEF DESCRIPTION OF THE DRAWINGS

Many aspects of the present embodiments can be better understood with reference to the following drawings. The components in the drawings are not necessarily drawn to scale, the emphasis instead being placed upon clearly illustrating the principles of the present embodiments. Moreover, in the drawings, all the views are schematic, and like reference numerals designate corresponding parts throughout the several views.
FIG. 1 is a schematic isometric exploded view of a waterproof lamp according to an embodiment.
FIG. 2 is an isometric view of a cap of the lamp of FIG. 1.
FIG. 3 is an isometric view of a lamp base of the lamp of FIG. 1.
FIG. 4 is an isometric view of the lamp base of the lamp of FIG. 1, viewed from a different perspective.
FIG. 5 is an isometric view of the waterproof lamp of FIG. 1, with the cap of FIG. 2 removed for clarity.

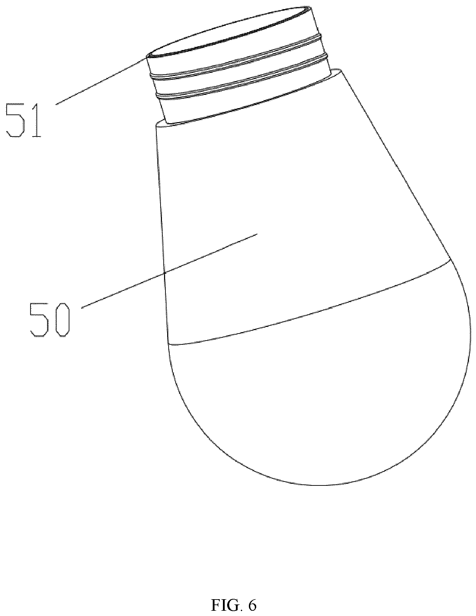

FIG. 6 is an isometric view of a shield of the lamp of FIG. 1.

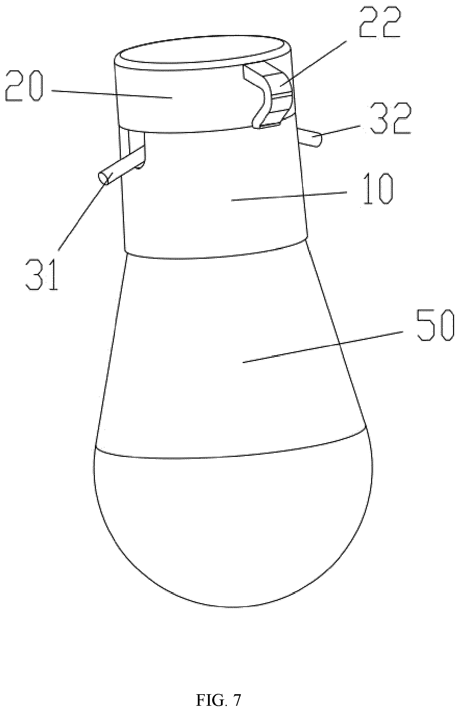

FIG. 7 is an isometric assembled view of the lamp of FIG. 1.

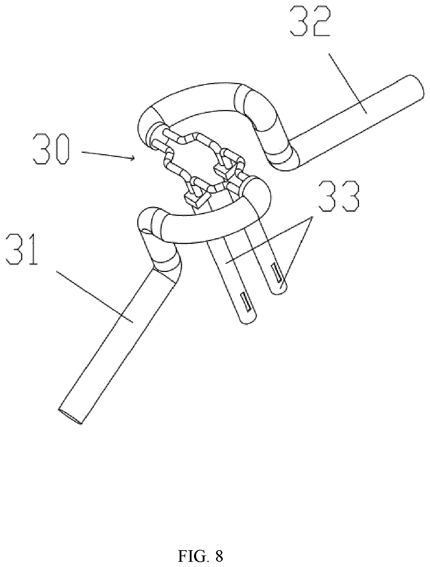

FIG. 8 is an isometric assembled view of an assembly including two cables and two conductive members of the lamp of FIG. 1.

### DETAILED DESCRIPTION

The disclosure is illustrated by way of example and not by way of limitation in the figures of the accompanying drawings, in which like reference numerals indicate similar elements. It should be noted that references to "an" or "one" embodiment in this disclosure are not necessarily to the same embodiment, and such references can mean "at least one" embodiment.

The terms "upper", "lower", "left" and "right", indicating the orientational or positional relationship based on the orientational or positional relationship shown in the drawings, are merely for convenience of description, but are not intended to indicate or imply that the device or elements must have a particular orientation or be constructed and operated in a particular orientation, and therefore should not be construed as limiting the present invention. The terms "first" and "second" are used for descriptive purposes only and are not to be construed as indicating or implying relative importance or implicitly indicating the number of technical features. The meaning of "multiple" is two or more, unless expressly stated otherwise.

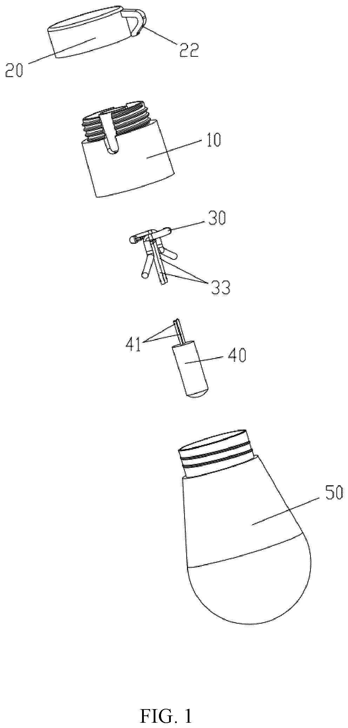

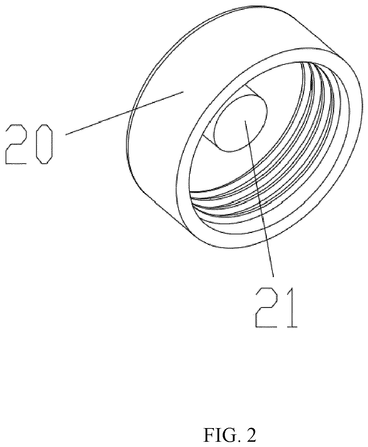

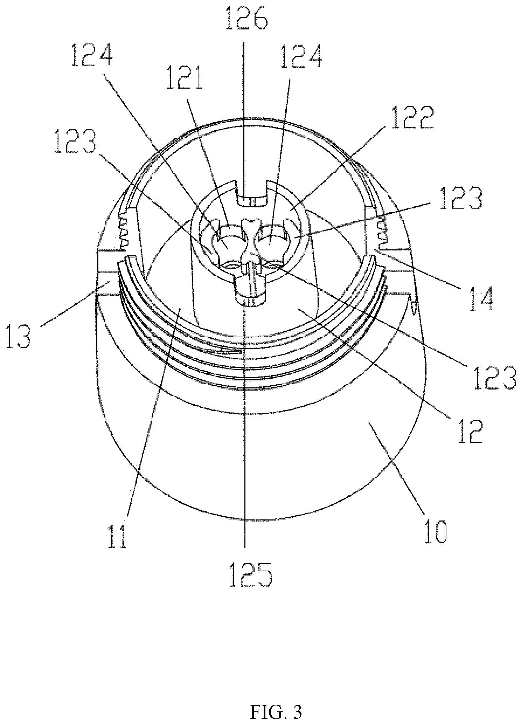

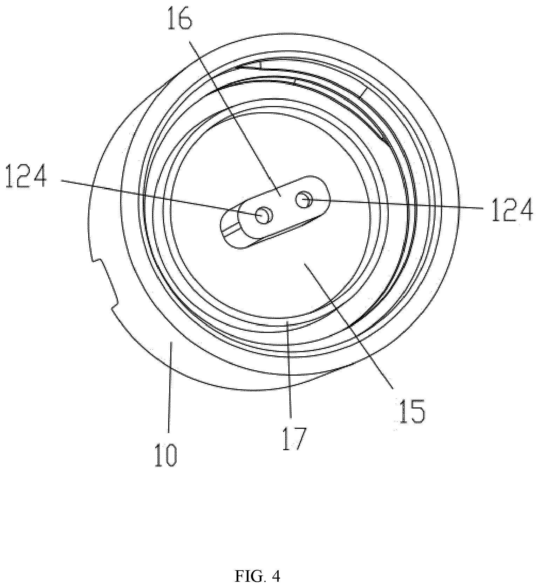

Referring to FIGS. 1-4, in one embodiment, a waterproof lamp includes a lamp base 10 and a cap 20. The lamp base 10 defines a first chamber 11 and a mounting member 12 received in the first chamber 11. The lamp base 10 defines a first mounting opening 13 and a second mounting opening 14 that both communicate with the first chamber 11. The mounting member 12 defines a second chamber 122 and includes a first mounting post 121 received in the second chamber 122. The cap 20 is threadedly connected to the lamp base 10. The mounting member 12 is higher than the first mounting opening 13 and the second mounting opening 14.

In one embodiment, the mounting member 12 is received in the first chamber 11 and fixed to the lamp base 10. The first mounting post 121 is received in the second chamber 122 and fixed to the mounting member 12. In the embodiment, the lamp base 10 includes a hollow cylindrical portion. The first mounting opening 13 and the second mounting opening 14 extend from the top end of the hollow cylindrical portion are opposite each other. When liquid enters the first chamber 11, the liquid cannot enter the second chamber 122 because the mounting member 12 is higher than the bottom of the first mounting opening 13 and the second mounting opening 14. The liquid will flow out of the lamp base 10 from the first mounting opening 13 and the second mounting opening 14.

According to the invention, the mounting member 12 further includes one or more limiting portions 123 on the first mounting post 121. In the embodiment, there are two limiting portions 123 received in the second chamber 122. The cap 20 includes therein a limiting post 21. The cap 20 covers the mounting member 12 and the limiting post 21 is partly received in the second chamber 122 and abuts against the limiting portions 123 when the cap 20 is threadedly connected to the lamp base 10.

In one embodiment, the limiting portions 123 are received in the second chamber 122 and fixed to the first mounting post 121. The lamp base 10 and the cap 20 are easily connected to each other by thread connection. One ore more arc-shaped ears 22 may be formed on lateral surface of the cap 20 so as to allow the lamp to be hung on a desired position.

In one embodiment, the lamp base 10 further defines a third chamber 15 and a second mounting post 16 received in the third chamber 15. The second mounting post 16 and the first mounting post 121 extend along a same imaginary line. At least two mounting holes 124 extend along the imaginary line and extend through the first mounting post 121 and the second mounting post 16, and communicate with the second chamber 122.

In one embodiment, the first chamber 11 is defined in the top end of the lamp base 10 and the third chamber 15 is defined in the bottom end of the lamp base 10. The second mounting post 16 is received in the third chamber 15 and fixed to the lamp base 10. The second mounting post 16 and the first mounting post 121 extend along the same imaginary line such that the mounting holes 124 can extend from one end of the first mounting post 121 to one end of the second mounting post 16.

In one embodiment, the mounting member 12 defines a third mounting opening 125 and a fourth mounting opening 126 that communicate with the second chamber 122, which enables the third mounting opening 125 and the fourth mounting opening 126 to communicate with two mounting holes 124. The first mounting post 121 is higher than the bottom of each of the third mounting opening 125 and the fourth mounting opening 126.

In the embodiment, the third mounting opening 125 and the fourth mounting opening 126 communicate with the first chamber 11. The bottom of each of the third mounting opening 125 and the fourth mounting opening 126 is higher than the bottom of each of the first mounting opening 13 and the fourth mounting opening 14. When liquid enters the second chamber 122, the liquid cannot enter the mounting holes 124 because the first mounting post 121 is higher than the bottom of each of the third mounting opening 125 and the fourth mounting opening 126. The liquid will flow into the first chamber 11 from the third mounting opening 125 and the fourth mounting opening 126, and then flow out of the lamp base 10 through the first mounting opening 13 and the second mounting opening 14.

In one embodiment, the lamp further includes a cable assembly 30 including a first cable 31, a second cable 32 and two conductive members 33. The first cable 31 and the second cable 32 are respectively electrically connected to the two conductive members 33. The two conductive members 33 are respectively received in the two mounting holes 124. The first cable 31 passes through the third mounting opening 125 and the first mounting opening 13 and one end of the first cable 31 extends out of the lamp base 10. The second cable 32 passes through the fourth mounting opening 126 and the second mounting opening 14 and one end of the second cable 32 extends out of the lamp base 10.

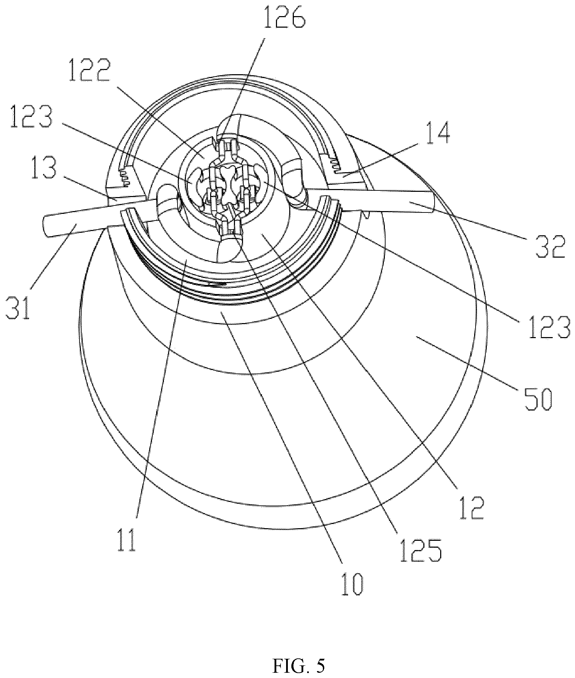

In the embodiment, no plastic injection molding process is needed for forming sealing between the lamp base 10 and the cables 31 and 32, which facilitates reduction of cost. In one embodiment, the first mounting opening 13 and the second mounting opening 14 are opposite each other, and the third mounting opening 125 and the fourth mounting opening 126 are opposite each other. As shown in FIG. 5, either of the first mounting opening 13 and the second mounting opening 14 is not aligned with either of the third mounting opening 125 and the fourth mounting opening 126. In this case, the first cable 31 passes through the third mounting opening 125, is wounded around the outer surface of the mounting member 12, and extends out of the mounting member 12 through the first mounting opening 13. The second cable 32 passes through the fourth mounting opening 126, is wounded around the outer surface of the mounting member 12, and extends out of the mounting member 12 through the second mounting opening 14. With such arrangement, the first cable 31 and the second cable 32 can sustain stronger pulling force. In an alternative embodiment, the first mounting opening 13, the second mounting opening 14, the third mounting opening 125, and the fourth mounting opening 126 may be aligned with one another. In this case, the first cable 31 directly passes through the third mounting opening 125 and the first mounting opening 13 without wounding around the outer surface of the mounting member 12. The second cable 32 directly passes through the fourth mounting opening 126 and the second mounting opening 14 without wounding around the outer surface of the mounting member 12.

In the embodiment, when the cap 20 is threadedly connected to the lamp base 10, the limiting post 21 is partly received in the second chamber 122 and abuts against the limiting portion 123. The limiting post 21 further abuts against the first cable 31 and the second cable 32, thereby holding the conductive members 33 within the mounting holes 124.

In the embodiment, if liquid enters the first chamber 11 through the first cable 31 or the second cable 32, since the mounting member 12 is higher than the bottom of each of the first mounting opening 13 and the second mounting opening 14, the liquid cannot enter the second chamber 122. The liquid will flow out of the lamp base 10 from the first mounting opening 13 and the second mounting opening0 14. if liquid enters the second chamber 122 through the first cable 31 or the second cable 32, since the first mounting post 121 is higher than the bottom of each of the third mounting opening 125 and the fourth mounting opening 126, the liquid cannot enter the mounting holes 124 and come into contact with the conductive members 33. The liquid will flow into the first chamber 11 through the third mounting opening 125 and the fourth mounting opening 126, and flow out of the lamp base 10 through the first mounting opening 13 and the second mounting opening0 14. As a result, the lamp has good waterproof performance.

In one embodiment, the lamp further includes a light bulb 40 and a shield 50. The light bulb 40 has two pins 41 that are respectively inserted into the two mounting holes 124 and make an electrical connection with the conductive members 33. The light bulb 40 is received in the shield 50. and the shield 50 is threadedly connected to the lamp base 10.

In one embodiment, the lamp further includes a sealing ring 17. The shield 50 includes an annular protrusion 51 on one end thereof. The sealing ring 17 is received in the third chamber 15. The sealing ring 17 is received in the shield 50 and is in tight contact with the shield 50 and the annular protrusion 51 is in tight contact with the lamp base 10 when the shield 50 is connected to the lamp base 10. With such arrangement, a tight connection is formed between the shield 50 and the lamp base 10, which prevents external liquid from entering the shield 50 or the third chamber 15 through the joint where the shield 50 is connected to the lamp base 10.

## Claims

1. A waterproof lamp comprising:
a lamp base (10) defining a first chamber (11) and comprising a mounting member (12) received in the first chamber (11), the lamp base (10) defining a first mounting opening (13) and a second mounting opening (14) that both communicate with the first chamber (11), the mounting member (12) defining a second chamber (122) and comprising a first mounting post (121) received in the second chamber (122); and
a cap (20) threadedly connected to the lamp base (10);
**characterized in that** the mounting member (12) further comprises a limiting portion (123) on the first mounting post (121), the limiting portion (123) is received in the second chamber (122), the cap (20) comprises therein a limiting post (21), the cap (20) covers the mounting member (12) and the limiting post (21) is partly received in the second chamber (122) and abuts against the limiting portion (123) when the cap (20) is threadedly connected to the lamp base (10).

2. The waterproof lamp according to claim 1, wherein the lamp base (10) further defines a third chamber (15) and a second mounting post (16) received in the third chamber (15), and the second mounting post (16) and the first mounting post (121) extend along a same imaginary line.

3. The waterproof lamp according to claim 2, wherein two mounting holes (124) extend along the imaginary line and extend through the first mounting post (121) and the second mounting post (16), and communicate with the second chamber (122).

4. The waterproof lamp according to claim 3, wherein the mounting member (12) defines a third mounting opening (125) and a fourth mounting opening (126) that communicate with the second chamber (122), which enables the third mounting opening (125) and the fourth mounting opening (126) to communicate with two mounting holes (124).

5. The waterproof lamp according to claim 3, further comprising a first cable (31), a second cable (32) and two conductive members (33), wherein the first cable (31) and the second cable (32) are respectively electrically connected to the two conductive members (33), the two conductive members (33) are respectively received in the two mounting holes (124), the first cable (31) passes through the third mounting opening (125) and the first mounting opening (13) and one end of the first cable (31) extends out of the lamp base (10), and second cable (32) passes through the fourth mounting opening (126) and the second mounting opening (14) and one end of the second cable (32) extends out of the lamp base (10).

6. The waterproof lamp according to claim 5, further comprising a light bulb (40) and a shield (50), wherein the light bulb (40) comprises two pins (41) that are respectively inserted into the two mounting holes (124) and make an electrical connection with the conductive members (33), the light bulb (40) is received in the shield (50), and the shield (50) is connected to the lamp base (10).

7. The waterproof lamp according to claim 6, further comprising a sealing ring (17), wherein the shield (50) comprises an annular protrusion (51) on one end thereof, the sealing ring (17) is received in the third chamber (15), the sealing ring (17) is received in the shield (50) and is in tight contact with the shield (50) and the annular protrusion (51) is in tight contact with the lamp base (10) when the shield (50) is connected to the lamp base (10).

8. The waterproof lamp according to claim 1, wherein the mounting member (12) is higher than a bottom of each of the first mounting opening (13) and the second mounting opening (14).

9. The waterproof lamp according to claim 4, wherein the first mounting post (121) is higher than a bottom of each of the third mounting opening (125) and the fourth mounting opening (126).

## Patentansprüche

1. Wasserdichte Lampe, umfassend:
einen eine erste Kammer (11) begrenzenden und ein in der ersten Kammer (11) aufgenommenes Montageelement (12) umfassenden Lampensockel (10), wobei der Lampensockel (10) eine erste Montageöffnung (13) und eine zweite Montageöffnung (14) begrenzt, die beide eine Verbindung zu der ersten Kammer (11) aufweisen, wobei das Montageelement (12) eine zweite Kammer (122) begrenzt und eine in der zweiten Kammer (122) aufgenommene erste Montagesäule (121) umfasst; und
eine Kappe (20), die mit dem Lampensockel (10) schraubverbunden ist,
**dadurch gekennzeichnet, dass** das Montageelement (12) ferner an der ersten Montagesäule (121) einen Begrenzungsabschnitt (123) umfasst, der Begrenzungsabschnitt (123) in der zweiten Kammer (122) aufgenommen ist, die Kappe (20) in ihrem Inneren eine Begrenzungssäule (21) umfasst, die Kappe (20) das Montageelement (12) bedeckt und die Begrenzungssäule (21) teilweise in der zweiten Kammer (122) aufgenommen ist und, wenn die Kappe (20) mit dem Lampensockel (10) schraubverbunden ist, an dem Begrenzungsabschnitt (123) anliegt.

2. Wasserdichte Lampe nach Anspruch 1, wobei der Lampensockel (10) ferner eine dritte Kammer (15) begrenzt und eine zweite Montagesäule (16) in der dritten Kammer (15) aufgenommen ist und die zweite Montagesäule (16) und die erste Montagesäule (121) sich entlang einer gleichen imaginären Linie erstrecken.

3. Wasserdichte Lampe nach Anspruch 2, wobei zwei Montagelöcher (124) entlang der imaginären Linie und durch die ersten Montagesäule (121) und die zweiten Montagesäule (16) verlaufen und zu der zweiten Kammer (122) eine Verbindung aufweisen.

4. Wasserdichte Lampe nach Anspruch 3, wobei das Montageelement (12) eine dritte Montageöffnung (125) und eine vierte Montageöffnung (126) begrenzt, die zu der zweiten Kammer (122) eine Verbindung aufweisen, wodurch die dritte Montageöffnung (125) und die vierte Montageöffnung (126) in die Lage versetzt werden, zu den zwei Montagelöchern (124) eine Verbindung aufzuweisen.

5. Wasserdichte Lampe nach Anspruch 3, ferner ein erstes Kabel (31), ein zweites Kabel (32) und zwei leitende Elemente (33) umfassend, wobei das erste Kabel (31) und das zweite Kabel (32) jeweils elektrisch mit den zwei leitenden Elementen (33) verbunden sind, die zwei leitenden Elemente (33) jeweils in den beiden Montagelöchern (124) aufgenommen sind, das erste Kabel (31) durch die dritte Montageöffnung (125) und die erste Montageöffnung (13) verläuft und ein Ende des ersten Kabels (31) aus dem Lampensockel (10) herausragt und das zweite Kabel (32) durch die vierte Montageöffnung (126) und die zweite Montageöffnung (14) verläuft und ein Ende des zweiten Kabels (32) aus dem Lampensockel (10) herausragt.

6. Wasserdichte Lampe nach Anspruch 5, ferner eine Glühlampe (40) und eine Abschirmung (50) umfassend, wobei die Glühlampe (40) zwei Stifte (41) umfasst, die jeweils in die beiden Montagelöcher (124) eingesetzt sind und eine elektrische Verbindung zu den leitenden Elementen (33) herstellen, die Glühlampe (40) in der Abschirmung (50) aufgenommen ist und die Abschirmung (50) mit dem Lampensockel (10) verbunden ist.

7. Wasserdichte Lampe nach Anspruch 6, ferner einen Dichtungsring (17) umfassend, wobei die Abschirmung (50) an einem ihrer Ende einen ringförmigen Vorsprung (51) umfasst, der Dichtungsring (17) in der dritten Kammer (15) aufgenommen ist, der Dichtungsring (17) in der Abschirmung (50) aufgenommen ist und einen engen Kontakt zu der Abschirmung (50) aufweist und der ringförmige Vorsprung (51) einen engen Kontakt zu dem Lampensockel (10) aufweist, wenn die Abschirmung (50) mit dem Lampensockel (10) verbunden ist.

8. Wasserdichte Lampe nach Anspruch 1, wobei das Montageelement (12) höher ist als der jeweilige Boden der ersten Montageöffnung (13) und der zweiten Montageöffnung (14).

9. Wasserdichte Lampe nach Anspruch 4, wobei die erste Montagesäule (121) höher ist als der jeweilige Boden der dritten Montageöffnung (125) und der vierten Montageöffnung (126).

## Revendications

1. Une lampe étanche comprenant :
une embase de lampe (10) définissant une première chambre (11) et comprenant un élément de montage (12) reçu dans la première chambre (11), l'embase de lampe (10) définissant une première ouverture de montage (13) et une deuxième ouverture de montage (14) qui communiquent toutes deux avec la première chambre (11), l'élément de montage (12) définissant une deuxième chambre (122) et comprenant un premier plot de montage (121) reçu dans la deuxième chambre (122) ; et
un culot (20) relié par vissage à l'embase de lampe (10) ;
**caractérisée en ce que** l'élément de montage (12) comprend en outre une partie de limitation (123) sur le premier plot de montage (121), la partie de limitation (123) est reçue dans la deuxième chambre (122), le culot (20) comprend à l'intérieur de lui un plot de limitation (21), le culot (20) recouvre l'élément de montage (12) et le plot de limitation (21) est partiellement reçu dans la deuxième chambre (122) et bute contre la partie de limitation (123) lorsque le culot (20) est relié par vissage à l'embase de lampe (10).

2. La lampe étanche selon la revendication 1, dans laquelle l'embase de lampe (10) définit en outre une troisième chambre (15) et un deuxième plot de montage (16) reçu dans la troisième chambre (15), et le deuxième plot de montage (16) et le premier plot de montage (121) s'étend le long d'une même ligne imaginaire.

3. La lampe étanche selon la revendication 2, dans laquelle deux trous de montage (124) s'étendent le long de la ligne imaginaire et s'étendent à travers le premier plot de montage (121) et le deuxième plot de montage (16), et communiquent avec la deuxième chambre (122).

4. La lampe étanche selon la revendication 3, dans laquelle l'élément de montage (12) définit une troisième ouverture de montage (125) et une quatrième ouverture de montage (126) qui communiquent avec la deuxième chambre (122), ce qui permet à la troisième ouverture de montage (125) et la quatrième ouverture de montage (126) de communiquer avec deux trous de montage (124).

5. La lampe étanche selon la revendication 3, comprenant en outre un premier câble (31), un deuxième câble (32) et deux éléments conducteurs (33), le premier câble (31) et le deuxième câble (32) étant respectivement électriquement connectés aux deux éléments conducteurs (33), les deux éléments conducteurs (33) étant respectivement reçus dans les deux trous de montage (124), le premier câble (31) passant à travers la troisième ouverture de montage (125) et la première ouverture de montage (13), et une extrémité du premier câble (31) s'étendant hors de l'embase de lampe (10), et le deuxième câble (32) passant à travers la quatrième ouverture de montage (126) et la deuxième ouverture de montage (14) et une extrémité du deuxième câble (32) s'étendant hors de l'embase de lampe (10).

6. La lampe étanche selon la revendication 5, comprenant en outre une ampoule (40) et un écran (50), l'ampoule (40) comprenant deux broches (41) qui sont respectivement insérées dans les deux trous de montage (124) et établissent une connexion électrique avec les éléments conducteurs (33), l'ampoule (40) étant reçue dans l'écran (50) et l'écran (50) étant connecté à l'embase de lampe (10).

7. La lampe étanche selon la revendication 6, comprenant en outre une bague d'étanchéité (17), l'écran (50) comprenant une protubérance annulaire (51) sur une extrémité de lui-même, la bague d'étanchéité (17) étant reçue dans la troisième chambre (15), la bague d'étanchéité (17) étant reçue dans l'écran (50) et étant en contact étroit avec l'écran (50) et la saillie annulaire (51) étant en contact étroit avec l'embase de lampe (10) lorsque l'écran (50) est connecté à l'embase de lampe (10).

8. La lampe étanche selon la revendication 1, dans laquelle l'élément de montage (12) est plus haut qu'une partie inférieure de chaque ouverture parmi la première ouverture de montage (13) et la deuxième ouverture de montage (14).

9. La lampe étanche selon la revendication 4, dans laquelle le premier plot de montage (121) est plus haut qu'une partie inférieure de chaque ouverture parmi la troisième ouverture de montage (125) et la quatrième ouverture de montage (126).
